# NEUE EUROPÄISCHE PATENTSCHRIFT

(11) **EP 0 472 684 B2**
(45) Veröffentlichungstag und Bekanntmachung des Hinweises auf die Entscheidung über den Einspruch: **25.08.2004**
(45) Hinweis auf die Patenterteilung: 10.11.1993
(21) Anmeldenummer: 91905064.1
(22) Anmeldetag: 18.03.1991
(51) Int. Cl.: A01G 9/10, A01G 31/00

(54) **VERFAHREN ZUR HERSTELLUNG VON TORFERSATZ, ANLAGE ZUR DURCHFÜHRUNG DIESES VERFAHRENS, ANWENDUNG DES VERFAHRENS UND NACH DIESEM VERFAHREN HERGESTELLTER TORFERSATZ**
PROCESS AND INSTALLATION FOR MANUFACTURING SUBSTITUTE PEAT, APPLICATION OF THE PROCESS AND SUBSTITUTE PEAT MANUFACTURED BY SAID PROCESS
PROCEDE ET INSTALLATION DE PRODUCTION D'UN SUCCEDANE DE TOURBE, APPLICATION DU PROCEDE ET SUCCEDANE DE TOURBE PRODUIT SELON LEDIT PROCEDE

(30) Priorität: 20.03.1990 CH 91290
(43) Veröffentlichungstag der Anmeldung: 04.03.1992
(73) Patentinhaber: INTERTORESA AG, CH-3063 Ittigen (CH)
(72) Erfinder: BAUMANN, Gerhard, CH-3063 Ittigen (CH); PENNINGSFELD, Franz, D-8050 Freising (DE)
(74) Vertreter: Behnisch, Werner, Dr.
(86) Internationale Anmeldenummer: PCT/CH1991/000062
(87) Internationale Veröffentlichungsnummer: WO 1991/014358

(56) Entgegenhaltungen:
- EP-A- 0 070 782
- EP-A- 0 147 349
- EP-A- 0 324 689
- WO-A-83/03999
- WO-A-85/03192
- FR-A- 2 248 780
- FR-A- 2 402 401
- US-A- 3 645 714
- US-A- 3 877 920
- US-A- 4 229 250
- PATENT ABSTRACTS OF JAPAN, Band 14, Nr. 57, (C-684)(4000), 2. Februar 1990, & JP, S, 1285122 (TAKEDO SUDA) 16. November 1989

## Beschreibung

Die vorliegende Erfindung betrifft die Herstellung von hochwertigem Torfersatz aus organischem Material, insbesondere verholztem Material. Es geht dabei insbesondere darum, den zur Herstellung von Humusdüngern, gärtnerischen Erden und Torfkultursubstraten bisher in der Regel noch verwandten Hochmoortorf durch gleichwertiges Material zu ersetzen, weil Moorabbau und Torfverwendung für diese Zwecke aus Umwelt- und Naturschutzgründen in Zukunft unterbunden werden müssen. Mit Hilfe des beschriebenen Verfahrens ist dies unter Verwendung von anderweitig kaum verwertbaren Holzabfällen möglich.

Aus verschiedenen Fachpublikationen geht hervor, dass bis heute diverse Produkte als "Torfersatz" eingesetzt werden. Dies gilt beispielsweise für Kunststoffgranulate, Reisspelzen, Rindenkompost, Kokosfasern, Sägemehl, Hobelspäne usw. Keines der bisher empfohlenen Produkte weist jedoch alle wesentlichen charakteristischen Eigenschaften von wenig zersetztem Hochmoortorf auf, nämlich tiefes pH, Nährstoffarmut, geringe mikrobiologische Aktivität, Freiheit von Krankheitserregern, hoher Gehalt an wertvoller organischer Substanz, Adsorptionsvermögen und gute Abbauresistenz, wie dies bei der nach dem beschriebenen Verfahren produzierten Holzfaser der Fall ist.

Aus der EP-A-0 147 349 ist es bekannt, zur Herstellung von Kultursubstraten bestimmte Holzarten zu dämpfen und anschliessend zu defibrieren, und die Fasern ohne weitere Behandlung mit anderen Stoffen zu vermischen. Dieses Verfahren hat verschiedene Nachteile. Insbesondere verlangt es hohen Energieaufwand. Aenderungen der Faserstruktur sind nur sehr beschränkt möglich, der Produktionsgang ist kompliziert und verlangt hohe Investitionen und im Rahmen des Verfahrens ist weder eine Imprägnierung vorgesehen, noch möglich.

Aus der EP-A-324 689 ist ein Verfahren zur Aufbereitung von Holzfasern mittels Thermoschneckenpresse bekannt.

Keines dieser bekannten Verfahren ist technisch und wirtschaftlich zur Herstellung eines hochwertigen Torfersatzes geeignet. Das beschriebene Verfahren ermöglicht demgegenüber, praktisch beliebige Holzarten oder verholzte Materialien optimal sowohl in physikalischer wie in chemischer Hinsicht zu präparieren und so einen vollwertigen Torfersatz herzustellen. Im Produktionsgang findet ausserdem vorzugsweise eine durch die Erhitzung bedingte Vortrocknung statt, die durch eine angeschlossene Trocknungsanlage ergänzt werden kann.

Das erfindungsgemässe Verfahren geht aus dem Anspruch 1 hervor. Es hat sich aus verschiedenen Gründen als vorteilhaft erwiesen, das Material in einer Thermoschnekken-presse, z.B. gemäss PCT/CH 83/00059, (im weiteren kurz TSP genannt) herzustellen. Hierbei wird eine optimale physikalische Aufbereitung des Materials erzielt und gleichzeitig erfolgt die tiefgreifende Imprägnierung mit verschiedenen Zuschlagstoffen. Diese Hilfsstoffe, wie beispielsweise mineralischer Staub, erhöhen teils die Reibung zwischen dem oft glatten, feuchten Rohmaterial und den Schnecken der TSP und verbessern andererseits wenn sie in das Fasermaterial eingepresst oder inkorporiert werden, dessen physikalische, chemische bzw. biologische Eigenschaften auf lange Sicht, wobei es für den vorgesehenen Zweck optimal eingestellt werden kann. Auf die einzelnen Möglichkeiten wird später eingegangen.

Der Anspruch 10 betrifft die erfindungsgemässe Anlage und gibt an, welche Teile der Anlage vorzugsweise vorhanden sind, aber in beliebiger Kombination zum Einsatz kommen können. Mittelpunkt der Anlage ist wiederum die Doppelschnecken-Aufbereitungsanlage TSP, der bestimmte Aggregate vor- und nachgeschaltet werden können, um das zu verarbeitende Material optimal vorzubereiten und nachzubehandeln.

Die Anlage ist standortunabhängig, insbesondere was den Aufschluss des Materials betrifft. Vor allem ist auch ein Einsatz in Entwicklungsländern oder überall dort, wo bis heute organische, faserige Stoffe durch Verbrennung vernichtet werden, möglich und sinnvoll.

Das Endprodukt kann vorzugsweise auf einen Feuchtigkeitsgehalt von 20 - 45% getrocknet werden. Die Art des Aufschliessens des Materials ermöglicht eine vorteilhafte Vortrocknung, die durch eine Trockenvorrichtung, z. B. eine Bandtrockner oder Zyklon, ergänzt werden kann.

Die Erfindung betrifft auch eine besondere Anwendung des oben beschriebenen Verfahrens bzw. des hergestellten Torfersatzes gemäss Anspruch 12. Diese besondere Anwendung gestattet es, zu stark zersetzte, schwach strukturierte Torfarten, insbesondere Schwarztorf, deren Lagerung und Verwendung problematisch ist, entscheidend aufzuwerten, indem durch Zumischen des erfindungsgemässen Fasermaterials zu diesen Torfen ein Produkt entsteht, das üblichem Torf weitgehend entspricht. Das Gemisch aus Torf und Fasermaterial kann insbesondere in der oben beschriebenen Trockenvorrichtung getrocknet und dann wie normaler Torf verpackt, gepresst oder lose transportiert und gelagert werden.

Die Erfindung betrifft ferner einen Torfersatz gemäss Ansprüchen 13 bis 15.

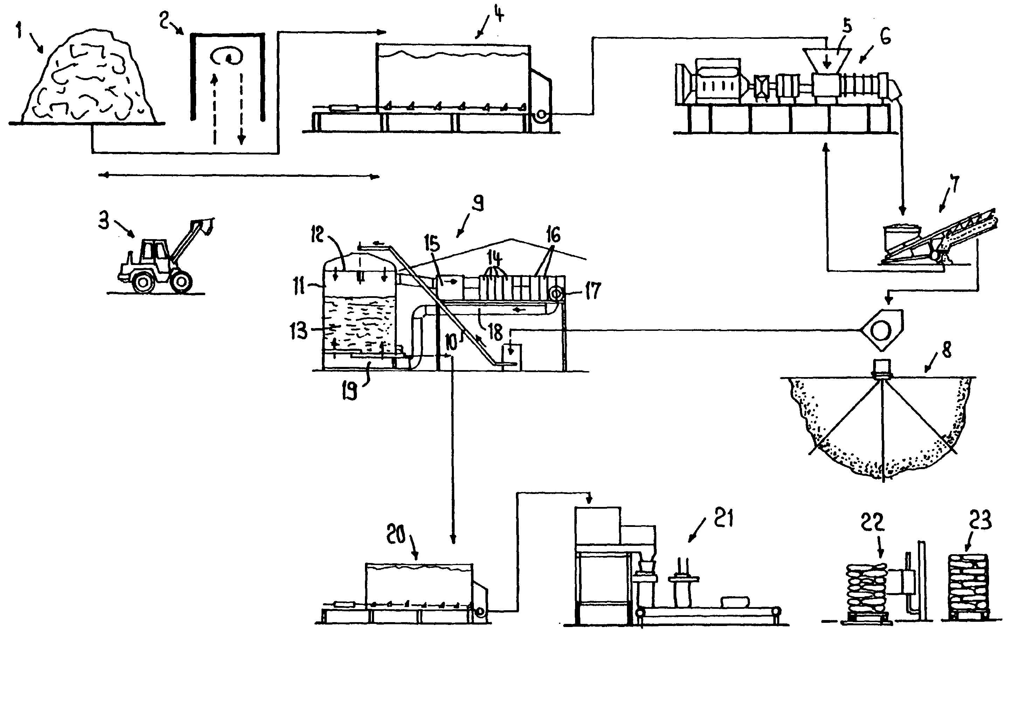

Die Erfindung wird nun anhand eines Ausführungsbeispiels einer erfindungsgemässen Anlage und einer Anzahl von Ausführungsvarianten näher erläutert. Die Zeichnung zeigt eine schematische Darstellung der Anlage.

Die dargestellte Anlage weist ein schematisch angedeutetes Rohstofflager 1 auf, aus dem das Rohmaterial einer Mischvorrichtung 2 zugeführt werden kann. Hier können sowohl verschiedenartige Rohstoffe miteinander vermischt als auch Hilfsstoffe zugesetzt werden. Das Material gelangt sodann in eine Zuteil- und Dosiereinrichtung 4 wobei der Transport zwischen den Anlageteilen 1, 2 und 4 mittels eines Schaufelladers 3 erfolgt. Aus der Zuteil- und Dosiereinrichtung 4 gelangt das Material mittels eines Förderbandes oder dergleichen Transportvorrichtung in den Einfülltrichter 5 einer Thermoschneckenpresse TSP 6. Das Material wird in dieser TSP zwischen zwei gegenläufig angetriebenen, mit geringem Spiel ineinander greifenden Schnecken zerquetscht und zerrieben und tritt in zerfasertem Zustand aus der Anlage aus. Es können auch mehr als zwei, insbesondere vier Schnecken vorhanden sein.

Es sind nicht dargestellte, einstellbare Stauplatten oder eine andere entsprechende Vorrichtung angeordnet, welche den Durchlass zu regulieren gestatten und mittels welcher somit bestimmt werden kann, wie lange das Material in der TSP verbleibt und wie intensiv es demzufolge behandelt und aufgeschlossen wird, wobei die Erwärmung des Materials infolge der mechanischen Bearbeitung eine wesentliche Rolle spielt. Je nach Bedarf kann eine Heizung oder Kühlung vorgesehen sein, um die Erwärmung des Materials zu steuern.

Das austretende Material gelangt sodann auf ein Schwingsieb 7, durch welches Materialteilchen der gewünschten Abmessungen durchtreten, während zu grobe Teile an den Eingang der TSP zurückgefördert werden, um zusätzlich aufgeschlossen und zerkleinert zu werden. Zu grobe Teile können allerdings auch direkt einer anderen geeigneten Verwertung zugeführt werden.

Das ausgesiebte Material wird sodann einer Schrapper-Kombination 8 zugeführt und gelangt dann zur Trockenvorrichtung 9. Das in die Trockenvorrichtung eintretende Material wird mittels eines Förderers 10 von oben in einen siloartigen Trockenraum 11 gefördert, wo es durch eine Verteilvorrichtung 12 gleichmässig an der Oberfläche eines im Trockenraum befindlichen Materialstapels 13 verteilt wird. Dieser Materialstapel liegt auf einem luftdurchlässigen Boden und kann dort durch eine nicht näher dargestellte Austragvorrichtung ausgetragen werden. Die Trockenluft zirkuliert in einem geschlossenen Kreislauf und gelangt von der Oberseite des Trockenraumes in einen mehrstufigen Kondensator 14. In diesem Kondensator befinden sich mehrere bezüglich des Luftdurchtrittes in Serie geschaltete und in Abstand voneinander angeordnete Kuhlelemente, in welchen die durchtretende Luft abgekühlt und die darin befindliche Feuchtigkeit teilweise kondensiert wird. Die Anordnung mehrerer einzelner Kühlelemente bzw. Kondensatoren hat den Vorteil, dass diese Elemente in Durchtrittsrichtung der Luft nur relativ kurz auszuführen sind und daher verhältnismässig leicht gereinigt werden können. Es ist nämlich damit zu rechnen, dass bei der Trocknung des aufgeschlossenen Fasermaterials erheblich Staub mitgeführt wird, welcher in einem Filter 15 nicht vollständig aufgenommen werden kann. Die Kühlelemente bzw. Kondensatoren 14 werden durch eine Wärmepumpe gekühlt, welche der Beheizung von Lufterhitzern 16 dient. Ein Ventilator 17 wälzt die Trockenluft um, wobei sie durch eine Leitung 18 in den Raum 19 unterhalb des Stapels 13 gelangt.

Die Anlage ist mit Messfühlern ausgerüstet, welche die Lufttemperatur unterhalb und über dem Materialstapel 13 erfassen. Ist die Differenz der gemessenen Temperaturen gering, was auf eine geringe Verdunstung im Material hinweist, wird die umgewälzte Luftmenge gedrosselt, während sie bei grosser Temperaturdifferenz erhöht wird, um so die Trockenwirkung dem Bedarf anzupassen. Im übrigen wird die in den Trockenraum eintretende Luft auf eine bestimmte Temperatur und relative Feuchtigkeit eingestellt, womit der Feuchtigkeitsgehalt in den untersten Schichten des Materials 13 bestimmt werden kann, wenn nur die Verweildauer des Materials in der Trockenanlage genügend lang ist. Wie erwähnt, kann diese Verweildauer zwischen 3 und 12 Stunden liegen.

Das auf einen Feuchtigkeitsgrad von 20 - 30% getrocknete Material gelangt sodann in eine weitere Dosiereinrichtung 20, aus der es in eine Absackanlage 21 gelangt. Es kann ein weiterer Anlageteil 22 vorgesehen sein, in welchem Materialballen in Kunststoffolien verpackt werden, worauf diese Ballen in ein Lager 23 verbracht werden.

Nachdem die Anlage und damit in grossen Zügen das Verfahren zur Herstellung von Torfersatz beschrieben worden ist, soll auf Besonderheiten dieses Verfahrens eingetreten werden. Mehrjährige Versuche haben gezeigt, dass verschiedene Holzarten und Pflanzen als Rohmaterial verwendet werden können, insbesondere Holzschnitzel, Strauchschnitt und teils zusätzlich Abfälle aus der Papierindustrie. Aus chemisch und physikalisch uneinheitlichen Produkten, beispielsweise Holzschnitzeln verschiedener Körnung, kann durch eine gezielte Vorbehandlung, insbesondere Bestimmung der Grösse der Partikel ein kontrolliertes, regelmässiges Produkt erzielt werden. Eine ideale Grösse der Schnitzel oder Späne weist beispielsweise eine Länge von 5 - 30 mm, eine Breite von 10 - 20 mm und eine Dicke von 5 - 10 mm auf. Die Struktur bzw. die Grösse und die mechanischen Eigenschaften der Partikel sind weitgehend massgebend für den Behandlungseffekt während des Produktionsprozesses, wobei kurze Schnitzel im allgemeinen eine feinere, gleichbleibende Struktur des Endproduktes, längere Schnitzel dagegen teilweise auch langfaserige Produkte mit grobem Faseranteil ergeben. Die Materialsortierung kann durch Sieben zusätzlich auch durch gezieltes Zerkleinern erfolgen. Das Rohmaterial kann auch mit trockenen oderfeuchten Zuschlagstoffen vermischt werden, welche rein mechanisch günstige Voraussetzungen für den anschliessenden Aufschluss in der TSP schaffen, indem beispielsweise die Oberfläche angetrocknet und/oder aufgeraut wird. Es ist ferner möglich, das Rohmaterial vor dem Aufschliessen in der TSP zu erhitzen und zu sterilisieren. Vorzugsweise werden Fichtenholz, Tannenholz, Pappelholz, Reduzierspäne, Schälspäne, Späne aus Kappholz, entrindete Baumabschnitte, Strauchschnitt und teilweise saubere Papierschlämme als Rohmaterialien verwendet, wobei beim Fällen von Bäumen anfallende Reduzierspäne mit Vorteil eingesetzt werden können. Diese Reduzierspäne sowie Pappelholz weisen gegen den biologischen Abbau widerstandsfähige Fasern auf, was zur Herstellung von Torfersatz erwünscht ist.

Die chemischen und teils auch mechanischen Eigenschaften können beeinflusst werden durch Zumischen von verschiedenen Hilfsstoffen, insbesondere Gesteinsmehle, Tonmineralien, Haupt- und Spurennährstoffe, Holzkohle, Aktivkohle, Braun- und Steinkohle, Sand, Säuren, Laugen, Farbstoffe, pilzhemmende Mittel, wachstumsfördernde Mittel, Netzmittel, Düngemittel, Pestizide, Stabilisatoren, Geruchshemmer, Duftstoffe, Spurenelemente, pH-Regler und dergleichen. Es können auch biologisch wirksame Stoffe beigemischt werden beispielsweise Bakterienkulturen, sofern das Material anschliessend der Kompostierung zugeführt werden soll. Ein besonders wichtiger Aspekt der Erfindung besteht nun darin, dass in der gewählten TSP nicht nur ein intensiver Zerfaserung des Ausgangsmaterials erfolgt, sondern dass dieses Material bzw. die entstehenden Fasern oder Flocken in der TSP zwischen den beiden Schnecken intensiv geknetet, zerquetscht, erhitzt und mit den Hilfs- oder Zuschlagstoffen richtiggehend imprägniert oder geimpft werden. Es tritt also eine äusserst intensive Behandlung des Fasermaterials mit den Hilfsstoffen auf, was besonders günstige Voraussetzungen für die Weiterbehandlung und ein optimales Endprodukt ergibt. Das Endprodukt ist qualitativ beeinflussbar, weil eine intensive, dauerhafte Verbindung von Rohstoffen mit Hilfsstoffen und Wirkstoffen erzielt wird. Düngeempfehlungen können weitgehend von der Torfkultur übernommen werden, d. h. die Voraussetzungen für die Erarbeitung von Rezepturen und Düngungsempfehlungen sind ähnlich denen von natürlichem Torf. Dementsprechend können die dort gewonnenen Erfahrungen weitgehend auf die nach vorliegendem Verfahren gewonnene Holzfaser übertragen werden, und zwar angepasst an den vorgesehenen Verwendungszweck mit genau dosierten Hilfsstoffmengen und gleichmässiger maschineller Einarbeitung.

Wenn dies angebracht erscheint, lässt sich auch die Abbauresistenz und die Benetzbarkeit der Holzfaser durch spezifisch wirkende Zuschlagstoffe erhöhen bzw. regulieren. Aehnliches gilt für kapillares Saugvermögen und die wasserhaltende Kraft. Hier kommen als Zuschlagstoffe u. a. verschiedene Tonminerale, fein vermahlene Gesteinsmehle, Perlit, Vermikulit usw. in Betracht.

Ferner sind folgende Massnahmen möglich:

Einstellung des gewünschten Wassergehaltes, der Faserstruktur, der Kapillarität und des Wasserhaltevermögen.

Herstellen von Mischungen vor oder nach dem Aufschluss, Beeinflussung der Abbauresistenz durch Zusatz von natürlichen oder chemischen Produkten (Pestizide, Fungizide usw.).

Die Beschaffenheit des Endproduktes, d. h. des Aufschlusses des Rohmaterials und dessen Imprägnierung oder Beimpfung mit Hilfsstoffen, ist abhängig vom Wassergehalt der Rohstoffe. Es hat sich gezeigt, dass ein Wassergehalt zwischen 45 und 60% bei einer möglichst rauhen, griffigen Oberfläche optimale Ergebnisse erzielen lässt. Man kann schon beim Einkauf auf entsprechendes Material achten, kann das Material aber auch vortrocknen, um die Oberfläche griffiger zu gestalten, oder aber es können die Reibung erhöhende Zuschlagstoffe wie Mineralstaub, Braun- oder Steinkohle, Gries, Granulat und dergleichen beigemengt werden.

Der Grad des Aufschlusses kann eingestellt werden durch die Verbleibzeit des Materials in der TSP bzw. den Einsatz zusätzlicher Schneckenpaare, wodurch ein besserer Aufschluss und eine grössere Erhitzung erzielt wird.

Strukturkorrekturen können auch durch Aussieben erzielt werden. Das Material kann auch vor dem Aufschluss sterilisiert werden, doch ist es im allgemeinen möglich, durch die Erwärmung in der TSP schon eine partielle Sterilisation zu erzielen. Die wärmung kann auf über 100°C erfolgen. Diese Erhitzung des aufgeschlossenen Produktes trägt u.a. zu der nachfolgend erwünschten Entwässerung desselben bei, wobei das Material auf dem Schwingsieb 7 sich abkühlen und ausdampfen kann. Das Ausdampfen kann intensiviert werden durch Belüftung mittels Ventilatoren, längere Transportbänder bzw. grosse Fallhöhen und dergleichen.

In der Praxis hat sich eine Präparierung der Holzfasern mit Weiss- und Schwarztorf, Braunkohle, Aktivkohle, Holzkohle und dergleichen Stoffen besonders bewährt. Das erfindungsgemässe Imprägnieren des Materials mit diesen Produkten pflanzlichen sprungs führt zu typisch torfähnlichen Eigenschaften. Der Einsatz von vorzugsweise tertiärer Braunkohle oder weicherdiger junger Braunkohle wirkt sich für das Pflanzenwachstum positiv aus. Nach der Anwendung bilden sich im Boden hochwertige Dauerhumusformen.

Durch Zusatz von besonderen Farbstoffen lässt sich die Holzfaser während des Produktionsgangs so einfärben, dass sie sich äusserlich kaum mehr vom natürlichen Torf unterscheidet.

Zur Erhöhung der Kapillarität bzw. Wasserhaltefähigkeit kann saugfähiges Material, beispielsweise Zellulosefasern, Altpapier, Baumwolle, Ton oder Lehm und dergleichen vor oder nach dem Aufschliessen zugesetzt werden.

Bei der Herstellung von Kompost kann die dargestellte Anlage ebenfalls mit grossem Vorteil eingesetzt werden. Man wird in diesem Falle von etwas anderen Rohstoffen ausgehen, insbesondere Grünmasse, d. h. Baum- und Strauchschnitt, Garten- und Friedhofsabraum, Gras- und Rasenschnitt, Blätterwerk und eventuell auch organischen Küchenabfälle. Es kann aber durchaus auch ein Anteil stärker verholzter Rohstoffe verwendet werden. Es zeigt sich auch bei dieser Anwendung, dass die Aufbereitung in der erwähnten TSP von grossem Vorteil ist. Die entstehende, für den biologischen Abbau verfügbare Oberfläche ist nach dem Aufschluss wesentlich grösserals bei üblichen Vorbehandlungen, wie beispielsweise Schreddern. Von grosser Bedeutung ist jedoch auch die oben eingehend dargelegte Möglichkeit, während des Aufschlusses in der TSP die organischen Rohstoffe äusserst intensiv und gleichmässig mit Hilfsstoffen zu imprägnieren oder zu beimpfen. Es kann beispielsweise eine Impfung mit Bakterien erfolgen und/oder eine Imprägnierung mit Düngern oder allgemein stickstoffhaltigen Stoffen oder Eiweissstoffen, um die Verrottung zu beschleunigen. Die Verrottung des aufgeschlossenen Materials erfolgt optimal bei einer Feuchtigkeit von 45 - 55%. Diese Feuchtigkeit kann schon erreicht werden durch einfaches Ausdampfen des Materials nach dem Verlassen der TSP, aber die Trocknungsvorrichtung 9 kann ebenfalls eingesetzt werden, um das Material auf den optimalen Feuchtigkeitsgehalt für eine Mietenkompostierung zu bringen. Nach erfolgter Verrottung kann der Kompost mittels der Trocknungsanlage 9 auch vorteilhaft getrocknet und in Säcke verpackt werden. Dabei können auch Mischprodukte hergestellt werden, indem z. B. erfindungsgemäss hergestellter Torfersatz mit Kompost vermischt, getrocknet und verpackt wird.

Hilfs- und Zuschlagstoffe können grundsätzlich an beliebiger geeigneter Stelle der Anlage, vor der TSP, oder auch direkt mit dem aufzuschliessenden Material laufend am Eintritt der TSP zugeführt bzw. zugemischt werden.

## Patentansprüche

1. Verfahren zur Herstellung von Torfersatz aus organischem, faserhaltigen Material, dem Hilfsstoffe beigemengt sind, **dadurch gekennzeichnet, daß** das organische faserhaltige Material in einer Aufbereitungsanlage (6) aufgeschlossen wird, wobei diesem Material vor dem Einbringen in die Anlage oder auch direkt mit dem aufzuschließenden Material laufend am Eintritt der Anlage die Hilfsstoffe zugeführt bzw. zugemischt werden und dieses Hilfsstoffe enthaltende Material in der Aufbereitungsanlage (6) unter hohem Druck und vorzugsweise Erhitzung zerquetscht, aufgefasert, verrieben und physikalisch aufgeschlossen wird, wobei gleichzeitig eine gleichmäßige und äußerst intensive Imprägnierung mit Hilfsstoffen erfolgt, um eine dauerhafte Verbindung der Rohstoffe mit den Hilfs stoffen zu erzielen, die dem Produkt torfähnliche Eigenschaften und auch ohne Kompostierung gute pflanzenbauliche Eignung verleiht.

2. Verfahren nach Anspruch 1, **dadurch gekennzeichnet, daß** die Hilfsstoffe aus folgender Gruppe ausgewählt sind:
Düngemittel, Schädlingsbekämpfungsmittel, wie z.B. Fungizide, Netzmittel, Farbstoffe, Stabilisatoren, Geruchshemmer, Duftstoffe, Torf, Kohle, Holzkohle, Braunkohle, Aktivkohle, organische Mehle, Bakterienpräparate, pH-regulierende Stoffe.

3. Verfahren nach Anspruch 1 und 2, **dadurch gekennzeichnet, daß** die Hilfsstoffe vor der Verarbeitung mit pufferungsfähigen Substanzen, z.B. Tonmineralen, vorgemischt und nach einer bestimmten Einwirkzeit dem faserhaltigen Material vor oder während der Zuführung zur Aufbereitungsanlage beigemischt werden.

4. Verfahren nach einem der Ansprüche 1 bis 3, **dadurch gekennzeichnet, daß** die Dauer bzw. die Intensität des Aufschließvorgangs und die damit verbundene Erhitzung des Materials der Weiterverarbeitung und dem Verwendungszweck angepaßt wird, wobei zur Herstellung von sterilem Torfersatz Temperaturen von 60-120°C, vorzugsweise über 100°C, zwecks Sterilisation und Vortrocknung des Materials gewählt werden.

5. Verfahren nach Anspruch 4, **dadurch gekennzeichnet, daß** die Nacherhitzung (Sterilisation) nach dem Austritt des Materials aus der Aufbereitungsanlage (6) erfolgt.

6. Verfahren nach einem der Ansprüche 1 bis 5, **dadurch gekennzeichnet, daß** das Material nach dem Austritt aus der Aufbereitungsanlage (6) bzw. der Nacherhitzung (Sterilisation) auf ein Schwingsieb oder in einen Zyklon zwecks Siebung und Ausdampfen (Vortrocknen) gebracht wird, wobei zusätzlich ein Gebläse zur raschen Wegführung von Wasserdampf eingesetzt werden kann.

7. Verfahren nach einem der Ansprüche 1 bis 6, **dadurch gekennzeichnet, daß** das Material vor dem Aufschließen zur Begrenzung der Faserlänge zerkleinert und/oder sortiert wird und oder auf eine Feuchtigkeit von vorzugsweise 45-60% gebracht wird, und/oder daß das aufgeschlossene Material auf eine Feuchtigkeit von 20-45% getrocknet wird.

8. Verfahren nach einem der Ansprüche 1 bis 7, **dadurch gekennzeichnet, daß** die aus der Aufbereitungsanlage (6) austretenden Materialien mit anderen Produkten vermischt und anschließend der direkten Verwertung oder aber einer Trocknungsanlage zugeführt werden.

9. Verfahren nach einem der Ansprüche 1 bis 8, **dadurch gekennzeichnet, daß** zur Erhöhung der Kapillarität bzw. Wasserhaltefähigkeit sauberes, saugfähiges Material, beispielsweise Ton, Zellulosefasern, Altpapier, Baumwolle und dergleichen, vor oder nach dem Aufschließen zugesetzt wird.

10. Anlage zur Durchführung des Verfahrens nach Anspruch 1 oder 2, die eine Thermo-Schneckenpresse (TSP) (6) aufweist, **gekennzeichnet durch** eine vorgeschaltete Mischund Dosierstation (2) zur Zugabe von Hilfsstoffen zum organischen Material, die mit einem oder mehreren der folgenden Anlageteile kombiniert ist:
a) eine vorgeschaltete Vortrocknungs-, Sortierund/oder Zerkleinerungsvorrichtung zur Bestimmung der Abmessungen der aufzuschließenden Materialstücke,
b) eine nachgeschaltete Vorrichtung zur Nacherhitzung bzw. Sterilisation des aufgeschlossenen Materials,
c) eine nachgeschaltete Sortier- und Ausdampfungsvorrichtung (Vortrocknen), z.B. ein Schwingsieb (Sieben) oder Zyklon zur Aussscheidung zu grober Materialstücke und zur Rückführung derselben zur TSP oder anderweitigen Verwendung,
d) eine nachgeschaltete Trockenvorrichtung (9) zum Trocknen des aufgeschlossenen Materials auf einen bestimmten Feuchtigkeitsgehalt.

11. Anlage nach Anspruch 10, **dadurch gekennzeichnet, daß** die TSP (6) regelbare Stauplatten oder Schieber zur Wahl der Verweilzeit des Materials aufweist, wobei am Eintritt der TSP Mittel, z. B. ein Niveaufühler zur Regelung der Materialzufuhr vorgesehen sein können.

12. Anwendung des Verfahrens nach Anspruch 1 oder 2 zur Veredlung von schwach strukturiertem Torf, insbesondere Schwarztorf, **dadurch gekennzeichnet, daß** der Torf nach dem Aufschließen mit dem imprägnierten Fasermaterial vermischt wird und anschließend getrocknet werden kann.

13. Torfersatz herstellbar nach einem Verfahren nach einem oder mehreren der vorhergehenden Ansprüche 1 - 9 bestehend aus unter Druck durch Quetschung aufgeschlossenem, fasrigen Holz oder verholztem, vorzugsweise sterilen Material, dessen Fasern mehrheitlich eine Länge von 5 bis 30 mm aufweisen, wobei das aufgeschlossene, fasrige Holz oder verholzte Material mit Hilfsstoffen gleichmäßig und äußerst intensiv imprägniert ist, um eine dauerhafte Verbindung der Rohstoffe mit den Hilfsstoffen zu erzielen und dem Produkt torfähnliche Eigenschaften und auch ohne Kompostierung gute pflanzenbauliche Eignung zu verleihen.

14. Torfersatz nach Anspruch 13, **dadurch gekennzeichnet, daß** die Hilfsstoffe aus fongender Gruppe ausgewählt sind:
Düngemittel, Netzmittel, Farbstoffe, Schädlingsbekämpfungsmittel aller Art, wie z.B. Fungizide, Stabilisatoren, Geruchshemmer, Duftstoffe, Torf, Holzkohle, Aktivkohle, Braun- und Steinkohle, Mehle aller Art.

15. Torfersatz nach Anspruch 13 oder 14, **dadurch gekennzeichnet, daß** als Rohstoff durch Bakterien oder Pilze bzw. durch andere Einflüsse schwer zersetzbare, aber pflanzenverträgliche Holzfasern vorhanden sind, insbesondere Pappelholz, Reduzierspäne und/oder Tropenhölzer.

## Claims

1. Process for manufacturing substitute peat from organic, fibrous material to which complementary substances are admixed, **characterized in that** said organic fibrous material is broken up in an installation of preparation (6) wherein said complementary substances are supplied resp. admixed to said material before supplying to the installation or also directly together with the material to be broken up continuously at the entrance of the installation and said complementary substances containing material is crushed, pulped, pulverized and broken up physically under high pressure and preferably heating in said installation of preparation (6) wherein at the same time a uniform and very intensive impregnation with said complementary substances is being effected to obtain a permanent incorporation of the raw materials with the complementary substances which impart said product peat-like properties and a good capacity for the culture also without composting.

2. Process according to claim 1 **characterized in that** said complementary substances are selected of the following group:
fertilizers, control means of parasites, e.g. fungicides, means for humidifying, dyes, stabilisators, smell hampering, fragrant substances, peat, coal, charcoal, burning coal, active coal, organic flours, bacteriological preparations or pH adjustment materials.

3. Process according to claim 1 or 2, **characterized in that** said complementary substances are pre-mixed before the treatment with adjustment substances e.g. clay minerals, and after a determined time of influence, mixed to the fibrous material, before, during or after the leading to the installation of preparation.

4. Process according to one of the claims 1 to 3 **characterized in that** the duration, resp. the intensity of the process of disaggregation and heating of the material which is related to it, is adapted to the subsequent treatment and to the utilization foreseen, the manufacturing of sterile substitute of peat requiring temperatures of 60-120°C preferably greater than 100°C for the purpose of sterilization and pre-drying of the material.

5. Process according to claim 4, **characterized in that** the subsequent heating (sterilization) takes place after the material has left the installation of preparation (6).

6. Process according to one of the claims 1 to 5, **characterized in that** the material, after leaving the installation of preparation (6) resp. the subsequent heating (sterilization) is brought on a vibrating sieve or in a cyclone for the purpose of sieving and drying up (pre-drying), an auxiliary fan being capable to be used for the fast elimination of water steam.

7. Process according to one of the claims 1 to 6, **characterized in that** before the disaggregation, in order to limit the length of the fibers, the material is reduced to small parts and/or sorted and/or brought to a humidity of preferably 45 to 60% and/or that the disaggregated material is dried to a humidity of 20 to 45%.

8. Process according to one of the claims 1 to 7, **characterized in that** the materials which leave the installation of preparation (6) are mixed with other products and then directly utilized or brought to a drying installation.

9. Process according to one of the claims 1 to 8, **characterized in that** for increasing the capillarity, resp. the capacity of retention of water, a clean material, capable of succion, e.g. clay, culture fibers, old paper, cotton and similar is added before or after the disaggregation.

10. Installation for carrying out the process according to claims 1 or 2, comprising a thermal worm extruder (TSP) (6) **characterized by** a mixing and sorting station (2) arranged in front for adding complementary substances to the organic material which is combined with one or more of the following parts of the installation:
a mixing and sorting station (2) arranged in front for adding complementary substances to the organic material, which is combined with one or more of the following parts of the installation,
a) a device arranged in front for pre-drying, sorting and/or reducing into small parts for determining the dimensions of the material pieces to be disaggregated,
b) a device connected downstream for posteriously heating, resp. sterilizing of the disaggregated material,
c) a device connected downstream for sorting and eliminating of a water steam (pre-drying) e.g. a vibrating sieve (sieving) or cyclone for eliminating the coarsest material parts and for returning them to the TSP or a different utilization,
d) a drying device (9) connected downstream for drying disaggregated material to a determined amount of humidity.

11. Installation according to claim 10, **characterized in that** the TSP (6) comprises adjustable accumulating plates or slides for the choice of the waiting time of the material, means, e.g. a level sensor, being capable to be provided at the inlet of the TSP for the adjustment of the supply of material.

12. Application of the process according to claims 1 or 2 for improving weak structure peat, more particularly black peat, **characterized in that** said peat is mixed after the disaggregation with the impregnated fibrous material, and can be dried afterwards.

13. Substitute peat producible in accordance with a process according to one or more of the proceding claims 1 to 9, consisting of a fibrous wood disaggregated under pressure by crushing, or, of ligneous, preferably sterile material, the fibers of which having preferably a length of 5 to 30 mm, wherein the disaggregated fibrous wood or wooden material is evenly and very intensively impregnated with said complementary substances to obtain a permanent association of said raw materials with said complementary substances and to impart to the product peat-like properties and a good capacity for the culture also without composting.

14. Substitute peat according to claim 13, **characterized in that** said complementary substances are selected of the following group: manure, humidification means, colourings, all kinds of control means of parasites, e.g. fungicides, stabilisators, smell hampering substances, fragrant substances, peat, charcoal, active coal, browncoal, hard coal, flours of all kinds.

15. Substitute peat according to claim 13 or 14, **characterized in that** as raw material are utilized fibers of wood which decompose with difficulty under the influence of bacteria or fungis, resp. other influences, but are compatible with the plants, more particularly poplar wood, reducing chips and/or tropical woods.

## Revendications

1. Procédé de fabrication d'un produit de remplacement de la tourbe à partir de matériau organique fibreux auquel des substances d'appoint sont mélangées, **caractérisé en ce que** le matériau organique fibreux est désagrégé dans une installation de préparation (6), les substances d'appoint étant amenées resp. mélangées à ce matériau avant l'apport dans l'installation ou aussi directement avec le matériau à désagréger régulièrement à l'entrée de l'installation et ce matériau contenant des substances d'appoint étant écrasé, réduit en fibres, broyé et cassé physiquement dans l'installation de préparation (6) sous haute pression et de préférence échauffement, une imprégnation simultanée et extrêmement intensive étant effectuée en même temps avec des substances d'appoint afin d'atteindre une liaison durable des matières premières avec les substances d'appoint qui donnent au produit des propriétés semblables à celles de la tourbe, et aussi sans compostage, une bonne aptitude à la culture.

2. Procédé selon la revendication 1, **caractérisé en ce que** les substances d'appoint suivantes peuvent être utilisées : engrais, moyens de combattre les parasites p. ex., fongicides, moyens d'humidification, colorants, stabilisateurs, amortisseurs d'odeur, matières odorantes, tourbe, charbon, p. ex. charbon de bois, charbon à brûler ou charbon actif, farines organiques, préparations bactériennes ou matières de régulation du pH.

3. Procédé selon la revendication 1 et 2, **caractérisé en ce que** les matières d'appoint sont prémélangées avant le traitement avec des substances de régulation, p. ex. des minéraux argileux et, après un temps d'action déterminé, mélangées au matériau fibreux, avant, pendant ou après l'amenée à l'installation de préparation.

4. Procédé selon l'une des revendications 1 à 3, **caractérisé en ce que** la durée, resp. l'intensité du processus de désagrégation et d'échauffement du matériau qui lui est lié, est adaptée au traitement subséquent et à l'utilisation prévue, la fabrication du remplacement de tourbe stérile demandant des températures choisies entre 60 et 120°, de préférence supérieure à 100° dans un but de stérilisation et de séchage du matériau.

5. Procédé selon la revendication 4, **caractérisé en ce que** l'échauffement subséquent (stérilisation) est effectué après la sortie du matériau de l'installation de préparation (6).

6. Procédé selon l'une quelconque des revendications 1 à 5, **caractérisé en ce que** le matériau, après la sortie de la machine de préparation (6), resp. de l'échauffement subséquent (stérilisation) est amené sur un tamis vibrant ou dans un cyclone, dans le but de tamiser et de dessécher (préséchage), un ventilateur additionnel pouvant être utilisé pour l'élimination rapide de la vapeur d'eau.

7. Procédé selon l'une des revendications 1 à 6, **caractérisé en ce qu'**avant la désagrégation, pour limiter la longueur des fibres, le matériau est réduit en petits morceaux et/ou trié et/ou amené à une humidité de 45-60 % de préférence et/ou que le matériau désagrégé est séché à une humidité de 20-45 %.

8. Procédé selon l'une des revendications 1 à 7, **caractérisé en ce que** les matériaux issus de la machine de préparation (6) sont mélangés avec d'autres produits et ensuite utilisés directement ou amenés à une installation de séchage.

9. Procédé selon l'une des revendications 1 à 8, **caractérisé en ce que** pour augmenter la capillarité, resp. la capacité de rétention d'eau, un matériau propre, capable d'aspirer, p. ex. argile, fibres de cellulose, vieux papier, coton et similaire est ajouté avant ou après la désagrégation.

10. Installation pour la mise en oeuvre du procédé selon la revendication 1 ou 2, comprenant une presse thermique à vis sans fin (TSP) (6), **caractérisée par** ; une station de mélange et dosage (2) disposée à l'avant pour l'adjonction de substances d'appoint au matériau organique qui est combinée avec une ou plusieurs des parties d'installation suivantes :
a) un dispositif de préséchage, triage et/ou de réduction en petits morceaux disposé à l'avant pour la détermination des dimensions des morceaux de matériau désagrégé,
b) un dispositif disposé à l'arrière pour chauffage postérieur, resp. stérilisation du matériau désagrégé,
c) un dispositif disposé à l'arrière pour le triage et l'élimination de la vapeur d'eau (préséchage), p. ex. un tamis vibrant (tamisage) ou cyclone pour l'élimination de pièces de matériau trop grossier et pour le renvoi de celles-ci au TSP ou utilisation différente.
d) un dispositif disposé à l'arrière (9) pour le séchage du matériau désagrégé à une teneur en humidité déterminée.

11. Installation selon la revendication 10, **caractérisée en ce que** la TSP (6) comprend des plaques d'accumulation ou coulisses réglables pour le choix du temps d'attente du matériau, des moyens pouvant être prévus à l'entrée de la TSP, p. ex. un senseur de niveau, pour le réglage de l'alimentation en matériau.

12. Utilisation du procédé, selon la revendication 1 ou 2 pour améliorer de la tourbe faiblement structurée, plus particulièrement de la tourbe noire, **caractérisée en ce que** la tourbe est mélangée après la désagrégation avec le matériau fibreux imprégné et peut ensuite être séchée.

13. Tourbe de remplacement obtenue selon un procédé selon une ou plusieurs des revendications 1 à 9 précédentes, consistant en un bois fibreux désagrégé sous pression par écrasement ou d'un matériau ligneux de préférence stérile, dont les fibres ont de préférence une longueur de 5 à 30 mm, imprégné simultanément et de manière extrêmement intensive avec les substances d'appoint afin d'atteindre une liaison durable des matières premières avec les substances d'appoint et de donner au produit des propriétés semblables à celles de la tourbe, et aussi, sans compostage, une bonne aptitude à la culture.

14. Tourbe de remplacement selon la revendication 13, **caractérisée en ce que** les substances d'appoint suivantes peuvent être utilisées : engrais, moyens d'humidification, colorants, moyens pour combattre les parasites de tous genres, p. ex. fongicides, stabilisateurs, amortisseurs d'odeurs, matières odorantes, tourbe, charbon de bois, charbon actif, charbon à brûler et charbon de terre, farines de tous genres.

15. Tourbe de remplacement selon la revendication 13 ou 14, **caractérisée en ce que** comme matière première sont utilisées des fibres de bois difficilement décomposables par des bactéries ou champignons, resp. d'autres influences, mais compatibles avec les plantes, plus particulièrement peuplier, copeaux réducteurs et/ou bois tropicaux.
